# EUROPEAN PATENT APPLICATION

(11) **EP 4 545 600 A1**
(43) Date of publication of application: **30.04.2025**
(21) Application number: 23826563.1
(22) Date of filing: 21.06.2023
(51) Int. Cl.: C08L 71/00, C08G 65/22, C08G 65/00, C09D 171/00, C09D 11/101, C08F 2/48

(54) **CATIONIC PHOTOCURABLE COMPOSITION, PAINT, ARTICLE OF MANUFACTURE WITH PHOTOCURABLE COATING, AND INK**

(30) Priority: 24.06.2022 CN 202210726411
(71) Applicant: Changzhou Zhengjie Intelligent Manufacture Technology Co., Ltd., Changzhou, Jiangsu 213100 (CN)
(72) Inventor: QIAN, Bin, hangzhou, Jiangsu 213100 (CN)
(74) Representative: Dilg, Haeusler, Schindelmann Patentanwaltsgesellschaft mbH
(86) International application number: PCT/CN2023/101910
(87) International publication number: WO 2023/246918

(57) **Abstract**

The present invention provides a cationic photocurable composition, a paint, an article of manufacture with photocured coating, and an ink. The cationic photocurable composition comprises A1; and/or A2; B: an epoxy compound; and C: a cationic initiator. On this basis, in one aspect, when the cationic photocurable composition of the present invention is subsequently used as a paint, the wet adhesion between the coating formed of the paint to a substrate film interface is better, and the coating also has excellent abrasion resistance. In another aspect, when subsequently used as an ink in intaglio printing, the described cationic photocurable composition can also more effectively avoid the occurrence of plate fogging.
A1: 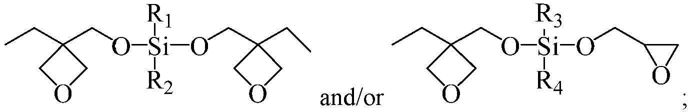 A2:

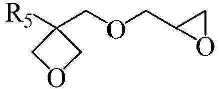

## Description

The present application is based on and claims priority to Chinese application No. 202210726411.3 filed on June 24, 2022, the disclosure of which is incorporated by reference herein in its entirety.

### TECHNICAL FIELD

The present invention relates to the technical field of photocuring, and specifically relates to a cationic photocurable composition, a paint, an article with photocured coating, and an ink.

### BACKGROUND

With the vigorous developments in the technical field of photocuring, the cationic photocurable compositions have been widely favored by the researchers in the productions and applications of the products such as photocurable paints and photocurable inks.
(1) Applications of the cationic photocurable compositions in the photocurable paint products.

Plastic or metal materials are the commonly used materials in our lives and industries. For example, they are widely used in packaging industries such as food packaging, beverage packaging, and pharmaceutical packaging. However, the adhesion between the metal material and the photocuring coating is poor, especially in a high humidity environment (especially during the plum rain season in the south China).

In the prior art, CN112574650A discloses a cationic curable composition for a metal substrate, comprising a polyhydroxy resin, an epoxy compound, an oxetanyl-containing compound, and a cationic initiator, wherein the polyhydroxy resin is a polyester resin and/or a phenolic resin, and the molar ratio of the hydroxyl group, the tertiary epoxy group, and the tertiary epoxy group is 1:(1 to 15):(1 to 25). The cationic curable composition can greatly improve the adhesion of the coating on the metal substrate. However, the wet adhesion performance is not mentioned.

CN100473681C discloses a novel method for treating the surface of a plastic material, including applying a composition to at least one surface of the plastic material, and then polymerizing and/or crosslinking the treated surface by exposure to a radiation source and/or an electron beam, wherein the composition comprises:1 to 99 wt% of at least one polymerizable and/or at least partially polymerizable organic matrix A having an oxetane reactive functional group (frA); 1 to 99 wt% of at least one polymerizable and/or at least partially polymerizable organic matrix B containing (co)monomers, (co)oligomers, and/or (co)polymers having epoxy (α1) and/or acrylate (α2) and/or alkenyl ether (α3) and/or hydroxyl (α4) reactive functional groups (frB); an effective amount of at least one cationic or cationic and radical initiator system C, and optionally at least one sensitizer D and at least one pigment E. The composition has good adhesion on a polypropylene (PP) plate. However, the wet adhesion performance is not mentioned.

CN103781814A discloses a photocurable resin composition, containing (A) a polyol acrylate compound, (B) a compound having an acrylic group or a methacrylic group and a carboxyl group in the molecule, (C) a siloxane compound, and (D) a photoradical generator, and having good wet adhesion and scratch (abrasion) resistance on a glass substrate and an ITO substrate. However, no relevant researches have been conducted on the wet adhesion and scratch resistance for plastic substrates or metal substrates.

CN112574649A discloses a cationic curable composition for a plastic substrate, comprising a polyhydroxy resin, an epoxy compound, an oxetanyl-containing compound, and a cationic initiator, wherein the polyhydroxy resin is a polyester resin, an acrylic resin, and/or a phenolic resin, and the molar ratio of the hydroxyl group, the tertiary epoxy group, and the tertiary epoxy group in the cationic curable composition is 1:(3 to 20):(1 to 25). The cationic curable composition can greatly improve the adhesion of the coating on the plastic substrate. However, the wet adhesion performance is not mentioned.

However, with the rapid developments of flat panel display industries in China, the demands for plastic substrates in high-end fields such as liquid crystal displays, semiconductor lighting, semiconductor flexible circuit boards, and electronic appliances are also increasing. However, compared with glass substrates, plastics are usually softer, have a low surface hardness, and are easily scratched. Therefore, a protective layer needs to be coated on its surface. This protective layer should have both good scratch resistance and sufficient flexibility. In addition, this coating should adhere well to the surface of the substrate on which it is coated. In particular, when plastic substrates are used in display devices such as LCDs and OLEDs, they are required to not only have good adhesion to the coatings, but also to maintain good wet adhesion under high humidity conditions (especially during the plum rain season in the south China). Thus, the adhesion between the metal substrate or plastic substrate and the coating interface becomes the primary problem to be solved in the metal or plastic applications. Especially under high humidity conditions, the wet adhesion of the substrate and the coating of the photocurable composition should not be decreased.

(2) Applications of the cationic photocurable compositions in the photocurable ink products.

When the ink in the prior art is used for gravure (intaglio) printing, there will be a layout (plate) fogging problem (the layout fogging mentioned in the present invention refers to the phenomenon that the ink on the printing plate that cannot be fully scraped off by the scraper during printing is transferred to the printed object, resulting in the contamination in the base of the printed object).

Given the above, on one hand, when the cationic photocurable composition in the prior art is used as a coating material, there are problems such as decreased wet adhesion between the coating and the interface of the plastic or metal substrate film, or poor scratch resistance of the coating. On the other hand, when the cationic photocurable composition in the prior art is used as an ink material, there is also a layout fogging problem. Therefore, it is necessary to provide a new cationic curable composition to solve the above problems.

### SUMMARY

The main purpose of the present invention is to provide a cationic photocurable composition, a paint (coating material), an article with photocured coating, and an ink, so as to solve the problems such as decreased wet adhesion between the coating and the interface of the plastic or metal substrate film or poor scratch resistance of the coating when the cationic curable composition in the prior art is used as a coating material; as well as the layout fogging problem when the cationic curable composition in the prior art is used as an ink material.

It should be noted that, in the case of no conflict, the embodiments in the subject application as well as the features therein can be combined with each other. The invention will be described in detail below with reference to the embodiments.

As described in the background of the present invention, when the cationic curable composition in the prior art is used as a coating material, there are problems such as decreased wet adhesion between the coating and the interface of the plastic or metal substrate film, or poor scratch resistance of the coating; and when the cationic curable composition in the prior art is used as an ink material, there is a layout fogging problem. In order to solve this problem, the present invention provides a cationic photocurable composition comprising the following components:
A1: 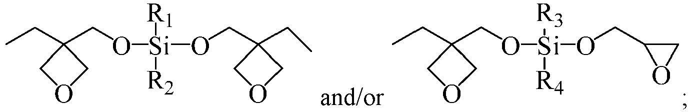
A2: 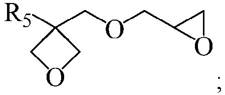
B: an epoxy compound; and
C: a cationic initiator;
wherein R₁, R₂, R₃, R₄, and R₅ each independently represent C₁ to C₆alkyl; the cationic photocurable composition comprises 50 to 70 parts by weight of A1, 10 to 30 parts by weight of A2, 5 to 25 parts by weight of B, and 1 to 10 parts by weight of C, and the sum of the parts by weight of A1 and A2 is 65 to 95 parts.

The inventors of the present application have unexpectedly found that, when the compound represented by general formula A1 is combined with the compound represented by general formula A2 and the epoxy compound B in certain parts by weight to use as a cationic photocurable composition, the composition has a lower viscosity and a faster curing speed, is insensitive to moisture, and has excellent adhesion. Based on this, on one hand, when the cationic photocurable composition of the present invention is subsequently used as a paint (water-based), the wet adhesion between the photocured coating formed thereby and the interface of the substrate film is better. At the same time, the coating also has very excellent scratch resistance. On the other hand, when the above cationic photocurable composition is subsequently used as an ink (oil-based) for gravure printing, it can also avoid the layout fogging problem.

It is additionally supplemented that, during actual operations, the cationic photocurable composition of the present invention can be calculated as 100 parts by weight, that is, the sum of the parts by weight of all components in the cationic photocurable composition is 100 parts.

In a preferred embodiment, the cationic photocurable composition comprises 50 to 70 parts by weight of A1, 10 to 25 parts by weight of A2, 5 to 25 parts by weight of B, and 1 to 5 parts by weight of C, and the sum of the parts by weight of A1 and A2 is 70 to 90 parts. Based on this, the cationic photocurable composition is subsequently used as a paint, the wet adhesion between the photocured coating formed thereby and the substrate can be further improved, and the scratch resistance of the photocured coating can also be greatly improved. At the same time, when the above cationic photocurable composition is subsequently used as an ink for gravure printing, it can also avoid the layout fogging problem to a greater extent.

In a preferred embodiment, R₁, R₂, R₃, R₄, and R₅ each independently represent C₁ to C₃ alkyl. Preferably, R₁ and R₂ are the same, and R₃ and R₄ are the same. Based on this, it is easier to obtain the raw materials. More preferably, A1 is 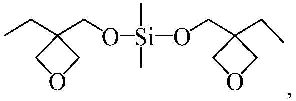 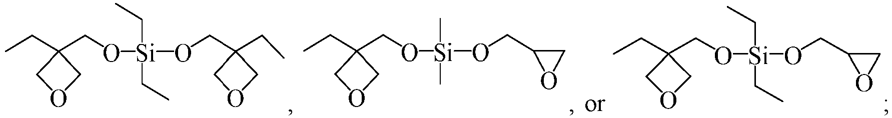 A2 is

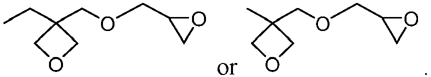

In a preferred embodiment, the epoxy compound is selected from one or more of alicyclic epoxy compounds, aliphatic epoxy compounds, aromatic epoxy compounds, or monofunctional oxetanes.

Illustratively, the alicyclic epoxy compound can be selected from one or more of 3,4-epoxycyclohexenemethyl-3,4-epoxycyclohexenoate, 3,4,3',4'-diepoxybiscyclohexane, 2,2-bis(3,4-epoxycyclohexyl)propane, 2,2-bis(3,4-epoxycyclohexyl)-1,3-hexafluoropropane, bis(3,4-epoxycyclohexyl)methane, 1-[1,1-bis(3,4-epoxycyclohexyl)]ethylbenzene, bis((3,4-epoxycyclohexyl)methyl)adipate, or bis(3,4-epoxycyclohexylmethyl) oxalate. The monofunctional oxetane can be selected from one or more of 3-hydroxymethyl-3-ethyloxetane, 3-benzyloxymethyl-3-ethyloxetane, 3-ethyl-3-(phenoxymethyl)oxetane, or 3-ethyl-3-((octyloxy)methyl)oxetane. The aromatic epoxy compound is a compound having aromatic ring(s) and epoxy group(s) in the molecule. As the aromatic epoxy compounds, the epoxy compounds having the conjugated system of aromatic rings such as bisphenol backbones, fluorene backbones, and biphenyl backbones can be exemplified. Among them, in order to achieve a higher refractive index of the product, compounds having bisphenol backbones and/or fluorene backbones are preferred. As the aromatic epoxy compounds, for example, bisphenol-A epoxy compounds, bisphenol-F epoxy compounds, fluorene-based epoxy compounds, etc. can be exemplified. Among them, bisphenol-A epoxy compounds and fluorene-based epoxy compounds such as 2,2'-[(1-methylethylene)bis(4,1-phenylenecarboxaldehyde)]bisoxirane are preferred. The alicyclic epoxy compound is a compound having at least one epoxy group bonded to an alicyclic ring in the molecule. Among the alicyclic epoxy compounds, the compounds having epoxycyclohexyl groups are suitable. In addition, in view of further increasing the curing speed of the composition, the multifunctional alicyclic epoxy compounds having two or more alicyclic epoxy groups in the molecule are preferred. Moreover, it is also preferable to use the compound having one alicyclic epoxy group as well as unsaturated double-bond group(s) such as vinyl in the molecule as the alicyclic epoxy compound.

In a preferred embodiment, the cationic initiator is selected from one or more of onium salts, and preferably the onium salt is selected from one or more of diaryliodonium salts of phosphoric acid, triarylsulfonium salts of phosphoric acid, or triarylsulfonium salts of antimonic acid. Preferably, the diaryliodonium salt of phosphoric acid is selected from one or more of 4,4'-ditolyliodonium hexafluorophosphate, bis(4-tert-butylphenyl)iodonium hexafluorophosphate, 4-isopropyl-4'-methyldiphenyliodonium hexafluorophosphate, 4-isobutyl-4'-methyldiphenyliodonium hexafluorophosphate, or 25% propylene carbonate solution of 4-isobutyl-4'-methyldiphenyliodonium hexafluorophosphate (25% refers to the mass fraction of the solvent in the solution); preferably, the triarylsulfonium salt of phosphoric acid is selected from one or more of 4-(phenylthio)phenyldiphenylsulfonium hexafluorophosphate, bis(4-(diphenylsulfonium)phenyl)sulfide-bishexafluorophosphate, or triphenylsulfonium hexafluorophosphate, 50% propylene carbonate solution of 4-(phenylthio)phenyldiphenylsulfonium hexafluorophosphate, 60% propylene carbonate solutions of 4-(phenylthio)phenyldiphenylsulfonium hexafluorophosphate and bis(4-(diphenylsulfonium)phenyl)sulfide-bishexafluorophosphate; preferably, the triarylsulfonium salt of antimonic acid is selected from one or more of bis(4-tert-butylphenyl)iodonium hexafluoroantimonate, bis[4-diphenylsulfoniumphenyl]sulfide dihexafluoroantimonate, or diphenyl-(4-phenylthio)phenylsulfonium hexafluoroantimonate, 50% propylene carbonate solutions of bis[4-diphenylsulfoniumphenyl]sulfide dihexafluoroantimonate and diphenyl-(4-phenylthio)phenylsulfonium hexafluoroantimonate.

Further preferably, without negatively affecting the application effect of the composition, in addition to component A1, component A2, and component B as polymerizable compounds, the cationic photocurable composition of the present invention may also selectively incorporate other cationic monomers, such as TCM-107, TCM-109, TCM-111, TCM-115, TCM-118, and TCM-120 produced by CHANGZHOU TRONLY NEW ELECTRONIC MATERIALS CO., LTD., and/or THM-201, THM-202, THM-203, THM-204, THM-205, THM206-1, THM207-1, THM-208, THM208-1, THM-209, THM209-1, THM-210, THM-211, THM-212, THM212-1, THM-213, THM-301, THM-401, THM-402, THM403-1, THM403-2, THM404-1, THM-405, THM-406, THM-407, THM-408, THM409-1, THM410-1, THM411-1, THM412-1, and THM-413 produced by CHANGZHOU TRONLY NEW ELECTRONIC MATERIALS CO., LTD..

In a preferred embodiment, without negatively affecting the application effect of the composition, in addition to component A1, component A2, component B, and component C, the cationic photocurable composition of the present invention may further include component D, i.e., a sensitizer, to further improve the photosensitivity of the composition, or to meet the photocuring requirements under a long wavelength light source,(especially under a UV-LED light source. Preferably, D has a mass percentage of 0.1 to 5% in the cationic photocurable composition. Preferably, D is selected from one or more of thioxanthone compounds, xanthone compounds, acridine compounds, anthracene compounds, or coumarin compounds; more preferably, anthracene compounds and thioxanthone compounds; further preferably, one or more of JRCure-1105 (ITX) and JRCure-1106 (DETX) produced by Tianjin Jiuri New Materials, and PSS303, PSS306, PSS510, PSS513, PSS515 produced by CHANGZHOU TRONLY NEW ELECTRONIC MATERIALS CO., LTD.

In a preferred embodiment, the cationic photocurable composition further comprises component E, i.e., a colorant (one or more pigments). The pigment may be an inorganic pigment or an organic pigment, and may be in any color, including but not limited to black, blue, brown, cyan, green, white, purple, magenta, red, orange, and yellow, as well as a special color of a mixture thereof. Preferably, E has a mass percentage of 2 to 20% in the cationic photocurable composition.

Suitable organic pigments may be perylenes, phthalocyanine dyes (e.g., phthalocyanine green, phthalocyanine blue), cyanine pigments (Cy3, Cy5, and Cy7), naphthalocyanine pigments, nitroso pigments, azo pigments, diazo pigments, diazo condensation pigments, basic dye pigments, basic blue pigments, indigo pigments, phloxin pigments, quinacridone pigments, isoindolinone pigments, dioxazine pigments, carbazole dioxazine violet pigments, alizarin lake pigments, phthaldiamide pigments, carmine lake pigments, tetrachloroisoindolinone pigments, perinone pigments, anthraquinone pigments, and quinophthalone pigments, etc., as well as mixtures of two or more thereof or their derivatives. Suitable inorganic pigments include metal oxides (e.g., titanium dioxide, conductive titanium dioxide, iron oxides (e.g., red iron oxide, yellow iron oxide, black iron oxide, and transparent iron oxide), and aluminum oxides), silicon oxides, carbon black pigments, metal sulfides, metal chlorides, etc., as well as mixtures of two or more thereof.

In a preferred embodiment, according to the requirements of the product application environment, in addition to the above components A to E, the cationic composition of the present invention may also selectively incorporate organic and/or inorganic auxiliaries commonly used in the art, including (but not limited to) fillers, levelling agents, dispersants, curing agents, surfactants, defoamers, storage enhancers, etc., which can be readily selected by those skilled in the art according to the requirements of the own products, and which are not gone into too much detail here.

In a preferred embodiment, the specific preparation process of the aforementioned cationic photocurable composition of the present invention can refer to the conventional preparation processes in the field of radiation curable compositions. Typically, the preparation process includes: batching, pre-dispersing, grinding, and filtering (filtering through a filter screen having a specified size to obtain a product with a target particle size) under the conditions of constant temperature and humidity and avoiding radiation light sources.

Further, the viscosity (23±2°C) of the cationic photocurable composition of the present invention is not particularly limited. Generally, when the composition is subsequently applied to form a coating, the viscosity is appropriately 500 mPa•s and less, preferably 10 to 200 mPa•s. The viscosity of the cationic photocurable composition exceeding 200 mPa•s or less than 10 mPa•s may lead to "poor coverage" and poor smoothness. At the same time, the viscosity of the cationic photocurable composition exceeding 200 mPa•s or less than 10 mPa•s may also lead to relatively poor stability of the composition during storage. Generally, the viscosity of the cationic photocurable composition can also be controlled by using a thickener or thinner, which can be readily selected by those skilled in the art according to the requirements of the own products, and which are not gone into too much detail here.

The present invention also provides a paint comprising the aforementioned cationic photocurable composition. Based on the above reasons, when the cationic photocurable composition of the present invention is subsequently used as a paint, the wet adhesion between the photocured coating formed thereby and the interface of the substrate layer is better. At the same time, the coating also has very excellent scratch resistance.

The present invention also provides an article with photocured coating, comprising a substrate layer and a photocured coating coated on at least a portion of the substrate layer, wherein the photocured coating is formed from the aforementioned cationic photocurable composition by radiation curing. Based on the above reasons, the wet adhesion between the photocured coating of the present invention and the interface of the substrate layer is better. At the same time, the coating also has very excellent scratch resistance. It is additionally stated that the cationic photocurable composition of the present invention is applied on the surfaces of different substrates to prepare photocured coatings, and the substrates used are not particularly limited, including but not limited to metal substrates, plastic substrates, etc..

Preferably, the substrate layer is a metal substrate layer or a plastic substrate layer. More preferably, the plastic substrate layer is a propylene film (PP), a polyethylene film (PE), a polyester film (PET), etc., and the metal substrate layer is a tinplate, an aluminum plate, etc.. When the composition of the present invention is used, good adhesion can be obtained even if the plastic substrate layer is not subjected to the corona treatment.

Further, for the cationic photocurable composition of the present invention, the form of the initiating energy source is not particularly limited. Under the energy radiation (such as ultraviolet light, visible light, infrared light, electron beam, laser), the radiation curable composition of the present invention can undergo the polymerization reaction and achieve the rapid curing. Illustratively, the initiating energy source includes (but is not limited to): ultra-high pressure mercury lamp, high pressure mercury lamp, medium pressure mercury lamp, mercury xenon lamp, low pressure mercury lamp, metal halide lamp, xenon lamp, deuterium lamp, chemical lamp, LED lamp, fluorescent lamp, tungsten lamp, Nd-YAG triple wave laser, He-Cd laser, nitrogen laser, Xe-Cl excimer laser, Xe-F excimer laser, semiconductor excited solid laser, i-ray, h-ray, g-ray, and other active lights, with a wavelength of 200-500 nm. The energy curing by electron beam, α-ray, β-ray, γ-ray, X-ray and neutron ray , etc. can also be used in the curing of the composition. A UV mercury lamp or a UV-LED lamp with a wavelength range of 200 to 500 nm wherein the radiation source has a radiation energy of 20 to 1000 mj/cm² is preferable.

Without particular limitations, dip coating, air knife coating, curtain coating, roller coating, die coating, wire rod coating, and the like can be adopted by those skilled in the art for the applying as above.

Further, the thickness of the cured coating of the pattern of the aforementioned cationic photocurable composition of the present invention can be varied according to actual requirements. It is preferably 0.1 to 20 µm, more preferably 0.5 to 15 µm. A coating with a thickness of less than 0.1 µm may not be formed uniformly, or it is difficult to be accurately applied according to the design. A coating with a thickness of more than 20 µm may consume a large amount of the composition, thereby increasing costs. Moreover, uniform application may become difficult, and the coating may become brittle and prone to delamination.

In order to further improve the above excellent performances, in some preferred embodiments, the cationic photocurable composition comprises 50 to 55 parts of 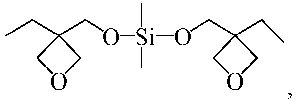 20 to 25 parts of 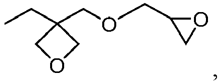 5 to 15 parts of 3,4-epoxycyclohexylmethyl-3',4'-epoxycyclohexyl carboxylate, 5 to 10 parts of 3-benzyloxymethyl-3-ethyloxetane, 1 to 5 parts of 4-(phenylthio)phenyldiphenylsulfonium hexafluorophosphate, and 1 to 3 parts of PSS-306. Alternatively, the cationic photocurable composition comprises 55 to 65 parts of 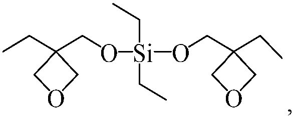 10 to 15 parts of 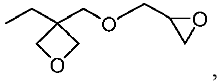 10 to 15 parts of 3,4-epoxycyclohexylmethyl-3',4'-epoxycyclohexyl carboxylate, 5 to 10 parts of 3-benzyloxymethyl-3-ethyloxetane, 1 to 5 parts of 4-(phenylthio)phenyldiphenylsulfonium hexafluorophosphate, and 1 to 3 parts of PSS-306. Alternatively, the cationic photocurable composition comprises 65 to 70 parts of 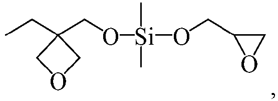 10 to 15 parts of 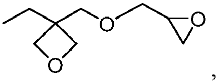 5 to 10 parts of 3,4-epoxycyclohexylmethyl-3',4'-epoxycyclohexyl carboxylate, 5 to 15 parts of 3-benzyloxymethyl-3-ethyloxetane, 1 to 5 parts of 4-(phenylthio)phenyldiphenylsulfonium hexafluorophosphate, and 1 to 3 parts of PSS-306. Alternatively, the cationic photocurable composition comprises 65 to 70 parts of 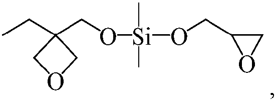 15 to 25 parts of 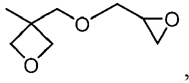 5 to 10 parts of 3-benzyloxymethyl-3-ethyloxetane, 1 to 5 parts of 4-isobutyl-4'-methyldiphenyliodonium hexafluorophosphate, and 1 to 3 parts of PSS-306. Alternatively, the cationic photocurable composition comprises 50 to 60 parts of 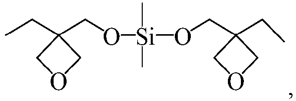 15 to 25 parts of 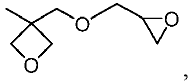 10 to 15 parts of 2,2'-[(1-methylethylene)bis(4,1-phenylenecarboxaldehyde)]bisoxirane, 1 to 10 parts of 3-benzyloxymethyl-3-ethyloxetane, 1 to 5 parts of 4-isobutyl-4'-methyldiphenyliodonium hexafluorophosphate, and 1 to 3 parts of PSS-306. Alternatively, the cationic photocurable composition comprises 60 to 70 parts of 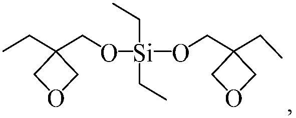 10 to 20 parts of 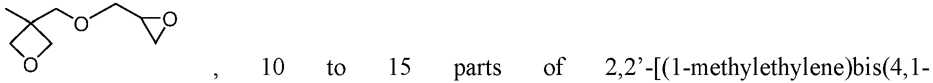 phenylenecarboxaldehyde)]bisoxirane, 1 to 10 parts of 3-benzyloxymethyl-3-ethyloxetane, 1 to 5 parts of 4-isobutyl-4'iodonium hexafluorophosphate, and 1 to 3 parts of PSS-306. Alternatively, the cationic photocurable composition comprises 55 to 65 parts of 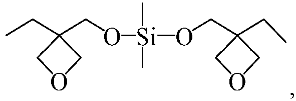 15 to 25 parts of 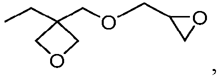 5 to 10 parts of 3,4-epoxycyclohexylmethyl-3',4'-epoxycyclohexyl carboxylate, 5 to 10 parts of 3-benzyloxymethyl-3-ethyloxetane, 1 to 5 parts of 4-(phenylthio)phenyldiphenylsulfonium hexafluorophosphate, and 1 to 3 parts of PSS-306. Alternatively, the cationic photocurable composition comprises 65 to 70 parts of 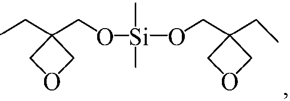 10 to 20 parts of 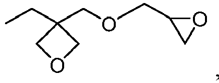 1 to 3 parts of 3,4-epoxycyclohexylmethyl-3',4'-epoxycyclohexyl carboxylate, 5 to 10 parts of 3-benzyloxymethyl-3-ethyloxetane, 1 to 5 parts of 4-(phenylthio)phenyldiphenylsulfonium hexafluorophosphate, and 1 to 3 parts of PSS-306.

The present invention also provides an ink comprising the aforementioned cationic photocurable composition. Based on the above reasons, when the cationic photocurable composition of the present invention is subsequently used as an ink for gravure printing, it can avoid the layout fogging problem to a greater extent.

In order to further improve the above excellent performances, in some preferred embodiments, the cationic photocurable composition comprises 50 to 55 parts of 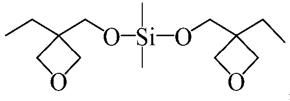 , 20 to 25 parts of 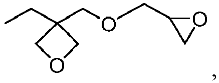 5 to 15 parts of 3,4-epoxycyclohexylmethyl-3',4'-epoxycyclohexyl carboxylate, 5 to 10 parts of 3-benzyloxymethyl-3-ethyloxetane, 1 to 5 parts of 4-(phenylthio)phenyldiphenylsulfonium hexafluorophosphate, 1 to 3 parts of PSS-306, and 3 to 5 parts of inorganic carbon black. Alternatively, the cationic photocurable composition comprises 50 to 60 parts of 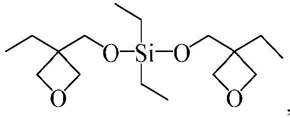 10 to 15 parts of 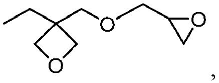 10 to 15 parts of 3,4-epoxycyclohexylmethyl-3',4'-epoxycyclohexyl carboxylate, 5 to 10 parts of 3-benzyloxymethyl-3-ethyloxetane, 1 to 5 parts of 4-(phenylthio)phenyldiphenylsulfonium hexafluorophosphate, 1 to 3 parts of PSS-306, and 3 to 5 parts of inorganic carbon black. Alternatively, the cationic photocurable composition comprises 60 to 70 parts of 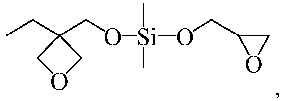 10 to 15 parts of 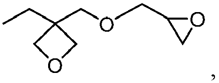 5 to 10 parts of 3,4-epoxycyclohexylmethyl-3',4'-epoxycyclohexyl carboxylate, 5 to 15 parts of 3-benzyloxymethyl-3-ethyloxetane, 1 to 5 parts of 4-(phenylthio)phenyldiphenylsulfonium hexafluorophosphate, 1 to 3 parts of PSS-306, and 3 to 5 parts of inorganic carbon black. Alternatively, the cationic photocurable composition comprises 60 to 70 parts of 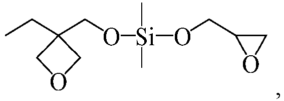 15 to 25 parts of 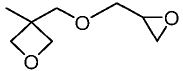 , 5 to 10 parts of 3-benzyloxymethyl-3-ethyloxetane, 1 to 5 parts of 4-isobutyl-4'-methyldiphenyliodonium hexafluorophosphate, 1 to 3 parts of PSS-306, and 3 to 5 parts of inorganic carbon black. Alternatively, the cationic photocurable composition comprises 55 to 65 parts of 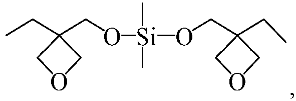 10 to 15 parts of 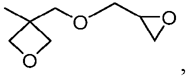 10 to 15 parts of 2,2'-[(1-methylethylene)bis(4,1-phenylenecarboxaldehyde)]bisoxirane, 1 to 10 parts of 3-benzyloxymethyl-3-ethyloxetane, 1 to 5 parts of 4-isobutyl-4'-methyldiphenyliodonium hexafluorophosphate, 1 to 3 parts of PSS-306, and 3 to 5 parts of inorganic carbon black. Alternatively, the cationic photocurable composition comprises 55 to 65 parts of 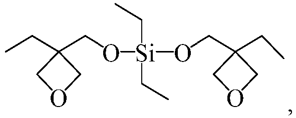 10 to 20 parts of 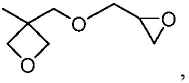 10 to 15 parts of 2,2'-[(1-methylethylene)bis(4,1-phenylenecarboxaldehyde)]bisoxirane, 1 to 10 parts of 3-benzyloxymethyl-3-ethyloxetane, 1 to 5 parts of 4-isobutyl-4'-methyldiphenyliodonium hexafluorophosphate, 1 to 3 parts of PSS-306, and 3 to 5 parts of inorganic carbon black. Alternatively, the cationic photocurable composition comprises 55 to 60 parts of 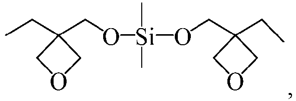 15 to 25 parts of 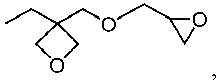 5 to 10 parts of 3,4-epoxycyclohexylmethyl-3',4'-epoxycyclohexyl carboxylate, 5 to 10 parts of 3-benzyloxymethyl-3-ethyloxetane, 1 to 5 parts of 4-(phenylthio)phenyldiphenylsulfonium hexafluorophosphate, 1 to 3 parts of PSS-306, and 3 to 5 parts of inorganic carbon black. Alternatively, the cationic photocurable composition comprises 60 to 70 parts of 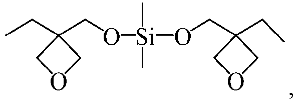 10 to 20 parts of 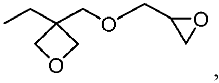 1 to 3 parts of 3,4-epoxycyclohexylmethyl-3',4'-epoxycyclohexyl carboxylate, 5 to 10 parts of 3-benzyloxymethyl-3-ethyloxetane, 1 to 5 parts of 4-(phenylthio)phenyldiphenylsulfonium hexafluorophosphate, 1 to 3 parts of PSS-306, and 3 to 5 parts of inorganic carbon black.

The present invention also provides the use of the aforementioned ink in the gravure printing. Based on the above reasons, when the aforementioned ink of the present invention is used for gravure printing, it can avoid the layout fogging problem to a greater extent.

### DESCRIPTION OF EMBODIMENTS

Hereinafter, the present invention will be further described in detail with reference to specific examples, which cannot be understood as a limitation to the protection scope of the present invention.

### 1. Preparation of the composition

According to the formulations shown in Examples 1-8 in Table 1, the raw materials were stirred at a constant speed for 1 hour using a high-speed stirrer under a yellow light lamp condition, then ground using a sand grinder, and then filtered through a filter screen with a particle size of 1 µm, to obtain a composition. Unless otherwise specified, the quantities in each example are based on parts by weight.

**Table 1**

| | Ex. 1 | Ex. 2 | Ex. 3 | Ex. 4 | Ex. 5 | Ex. 6 | Ex. 7 | Ex. 8 | Comparative Ex. 1 | Comparative Ex. 2 | Comparative Ex. 3 | Comparative Ex. 4 | Comparative Ex. 5 | Comparative Ex. 6 |
|---|---|---|---|---|---|---|---|---|---|---|---|---|---|---|
| A1 | 50 | | | | 55 | | 60 | 70 | 75 | | | | | |
| A1' | | 60 | | | | 65 | | | | | | | | |
| A1" | | | 70 | 70 | | | | | | 45 | | | | |
| A2 | 25 | 10 | 10 | | | | 20 | 15 | 5 | | 10 | 10 | 10 | 10 |
| A2' | | | | 20 | 20 | 15 | | | | 35 | | | | |
| A3 | | | | | | | | | | | 70 | | | |
| A4 | | | | | | | | | | | | 70 | | |
| A5 | | | | | | | | | | | | | 70 | |
| A6 | | | | | | | | | | | | | | 70 |
| B1 | 10 | 15 | 5 | | | | 7 | 2 | 15 | | 10 | 10 | 10 | 10 |
| B2 | | | | | 15 | 10 | | | | 10 | | | | |
| B3 | 10 | 10 | 10 | 5 | 5 | 5 | 8 | 8 | | 5 | 5 | 5 | 5 | 5 |
| C1 | | | | 3 | 3 | 3 | | | | 3 | 3 | 3 | 3 | 3 |
| C2 | 3 | 3 | 3 | | | | 3 | 3 | 3 | | | | | |
| D | 2 | 2 | 2 | 2 | 2 | 2 | 2 | 2 | 2 | 2 | 2 | 2 | 2 | 2 |
| Total | 100 | 100 | 100 | 100 | 100 | 100 | 100 | 100 | 100 | 100 | 100 | 100 | 100 | 100 |

| | | | | | | | | | | | | | | |
|---|---|---|---|---|---|---|---|---|---|---|---|---|---|---|
| A1: 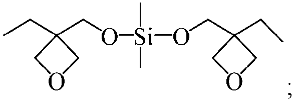 A1': 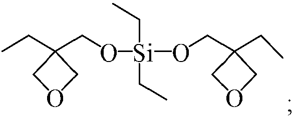 A1": 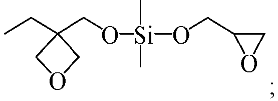 A2: 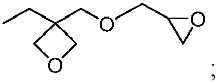 A2': 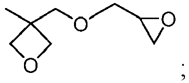 A3: 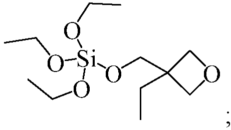 A4: 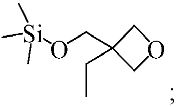 A5: 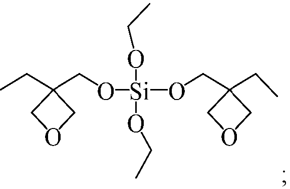 A6: 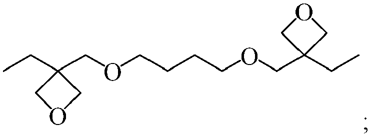 B1: 3,4-epoxycyclohexylmethyl-3',4'-epoxycyclohexyl carboxylate B2: 2,2'-[(1-methylethylene)bis(4,1-phenylenecarboxaldehyde)]bisoxirane B3:3-benzyloxymethyl-3-ethyloxetane C1: 4-isobutyl-4'-methyldiphenyliodonium hexafluorophosphate C2: 4-(phenylthio)phenyldiphenylsulfonium hexafluorophosphate D: PSS-306 (9,10-diethoxy-2-ethylanthracene, a sensitizer) | | | | | | | | | | | | | | |

### 1. Curing performance test

The photocurable compositions were sampled on various substrates and applied with a 10# wire rod to obtain a coating with a thickness of about 8 µm. The coating films were exposed to irradiation from a mercury lamp (RW-LED-YT200gl) light source at a temperature of 25°C and a humidity of 50% RH for 2 seconds, with an energy of 100 mj/cm². The film formation by curing was observed and evaluated by the finger touch method. The results are shown in Table 2 below.

The evaluation criteria for the finger touch method were as follows:
1. Oily and not cured;
2. Oily surface and cured bottom;
3. Sticky surface, with relatively heavy fingerprints after touching;
4. Essentially dry surface, being slightly astringent and having light fingerprints after touching;
5. Fully cured, having smooth surface, without fingerprints after touching.

### 2. Wet adhesion test

The photocurable composition was sampled on various substrates and applied with a 10# wire rod to obtain a coating with a thickness of about 8 µm. The coating film was exposed to irradiation from a mercury lamp (RW-LED-YT200gl) light source at a temperature of 25°C and a humidity of 50% RH, with an energy of 100 mj/cm². After it was completely cured, the coating was post-baked at 80°C for 30 min, then immersed in room temperature water for 2 h. The adhesion was tested by the cross-cut (100-grid) method, according to the following evaluation criteria:
Level 0: The cut edge was completely smooth without one grid falling off;
Level 1: There was a little coating peeling off at the intersection of incisions, with the affected cross-cut areas of not greater than 5%;
Level 2: There was coating peeling off at the intersection of incisions and/or along the edge of incisions, with the affected areas of greater than 5% but not greater than 15%;
Level 3: The coating was partially or completely peeled off in large fragments along the cut edge, and/or partially or completely peeled off on different parts of the grids, with the affected cross-cut areas of greater than 15% but not greater than 35%;
Level 4: The coating was peeled off in large fragments along the cut edge, and/or some grids were partially or completely peeled off, with the affected cross-cut areas of greater than 35% but not greater than 65%;
Level 5: The degree for peeling off exceeded Level 4.

### 3. Scratch resistance test

The photocurable composition was sampled on various substrates and applied with a 10# wire rod to obtain a coating with a thickness of about 8 µm. The coating film was exposed to irradiation from a mercury lamp (RW-LED-YT200gl) light source at a temperature of 25°C and a humidity of 50% RH, with an energy of 100 mj/cm². After it was completely cured, the cured film was rubbed back and forth with a #0000 steel wool ball, with a load of 500 g and a friction distance of 5 to 6 cm. The number of back and forth frictions at the time that the cured film was rubbed to have any traces was used to make the evaluation. The larger the value, the better the scratch resistance is.

**Table 2**

| | Curing performance | | | | | Wet adhesion | | | | | Scratch resistance | | | | |
|---|---|---|---|---|---|---|---|---|---|---|---|---|---|---|---|
| | PP | PE | PET | Tinplate | Aluminum Plate | PP | PE | PET | Tinplate | Aluminum Plate | PP | PE | PET | Tinplate | Aluminum Plate |
| Ex. 1 | 5 | 5 | 5 | 5 | 5 | 0 | 0 | 0 | 0 | 0 | 1230 | 1216 | 1661 | 1489 | 1504 |
| Ex. 2 | 5 | 5 | 5 | 5 | 5 | 0 | 0 | 0 | 0 | 0 | 1265 | 1244 | 1675 | 1503 | 1519 |
| Ex. 3 | 5 | 5 | 5 | 5 | 5 | 0 | 0 | 0 | 0 | 0 | 1480 | 1467 | 1814 | 1635 | 1768 |
| Ex. 4 | 5 | 5 | 5 | 5 | 5 | 0 | 0 | 0 | 0 | 0 | 1372 | 1360 | 1725 | 1624 | 1695 |
| Ex. 5 | 5 | 5 | 5 | 5 | 5 | 0 | 0 | 0 | 0 | 0 | 1298 | 1290 | 1697 | 1525 | 1558 |
| Ex. 6 | 5 | 5 | 5 | 5 | 5 | 0 | 0 | 0 | 0 | 0 | 1400 | 1377 | 1753 | 1600 | 1621 |
| Ex. 7 | 5 | 5 | 5 | 5 | 5 | 0 | 0 | 0 | 0 | 0 | 1335 | 1305 | 1712 | 1561 | 1595 |
| Ex. 8 | 5 | 5 | 5 | 5 | 5 | 0 | 0 | 0 | 0 | 0 | 1430 | 1401 | 1796 | 1647 | 1712 |
| Comparative Ex. 1 | 5 | 5 | 5 | 5 | 5 | 2 | 3 | 2 | 2 | 2 | 1200 | 1160 | 1400 | 1270 | 1305 |
| Comparative Ex. 2 | 3 | 1 | 4 | 4 | 4 | 2 | 3 | 1 | 1 | 1 | 1038 | 1013 | 1089 | 1053 | 1070 |
| Comparative Ex. 3 | 3 | 3 | 4 | 4 | 4 | 3 | 3 | 2 | 2 | 2 | 723 | 704 | 753 | 822 | 796 |
| Comparative Ex. 4 | 3 | 3 | 4 | 4 | 4 | 3 | 3 | 2 | 2 | 2 | 809 | 785 | 858 | 928 | 830 |
| Comparative Ex. 5 | 3 | 3 | 4 | 4 | 4 | 3 | 3 | 2 | 2 | 2 | 868 | 831 | 879 | 982 | 952 |
| Comparative Ex. 6 | 3 | 3 | 3 | 3 | 3 | 3 | 3 | 1 | 1 | 1 | 682 | 636 | 766 | 704 | 726 |

### 2. Preparation of gravure ink

According to the formulations shown in Examples 1-8 in Table 3, the raw materials were stirred at a constant speed for 1 hour using a high-speed stirrer under a yellow light condition, then ground using a sand grinder, and then filtered through a filter screen with a particle size of 1 µm, to obtain a gravure ink composition. Unless otherwise specified, the quantities in each example are based on parts by weight.

**Table 3**

| | Ex. 1 | Ex. 2 | Ex. 3 | Ex. 4 | Ex. 5 | Ex. 6 | Ex. 7 | Ex. 8 | Comparative Ex. 1 | Comparative Ex. 2 | Comparative Ex. 3 | Comparative Ex. 4 | Comparative Ex. 5 | Comparative Ex. 6 | Comparative Ex. 7 |
|---|---|---|---|---|---|---|---|---|---|---|---|---|---|---|---|
| A1 | 50 | | | | 60 | | 55 | 65 | 75 | | | | | | |
| A1' | | 55 | | | | 60 | | | | | | | | | |
| A1" | | | 65 | 65 | | | | | | 40 | | | | | 65 |
| A2 | 20 | 10 | 10 | | | | 20 | 15 | 5 | | 10 | 10 | 10 | 10 | 10 |
| A2' | | | | 20 | 10 | 15 | | | | 35 | | | | | |
| A3 | | | | | | | | | | | 65 | | | | |
| A4 | | | | | | | | | | | | 65 | | | |
| A5 | | | | | | | | | | | | | 65 | | |
| A6 | | | | | | | | | | | | | | 65 | |
| B1 | 10 | 15 | 5 | | | | 7 | 2 | 10 | | 10 | 10 | 10 | 10 | 15 |
| B2 | | | | | 15 | 10 | | | | 10 | | | | | |
| B3 | 10 | 10 | 10 | 5 | 5 | 5 | 8 | 8 | | 5 | 5 | 5 | 5 | 5 | |
| C1 | | | | 4 | 4 | 4 | | | | 4 | 4 | 4 | 4 | 4 | 4 |
| C2 | 4 | 4 | 4 | | | | 4 | 4 | 4 | | | | | | |
| D | 2 | 2 | 2 | 2 | 2 | 2 | 2 | 2 | 2 | 2 | 2 | 2 | 2 | 2 | 2 |
| E | 4 | 4 | 4 | 4 | 4 | 4 | 4 | 4 | 4 | 4 | 4 | 4 | 4 | 4 | 4 |
| Total | 100 | 100 | 100 | 100 | 100 | 100 | 100 | 100 | 100 | 100 | 100 | 100 | 100 | 100 | 100 |

| | | | | | | | | | | | | | | | |
|---|---|---|---|---|---|---|---|---|---|---|---|---|---|---|---|
| A1: 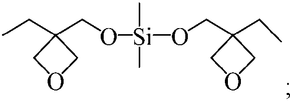 A1': 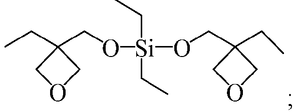 A1": 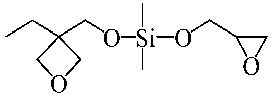 A2: 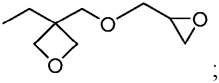 A2': 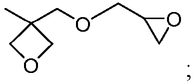 A3: 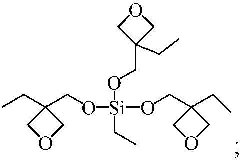 A4: 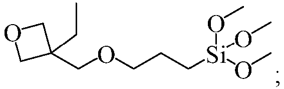 A5: 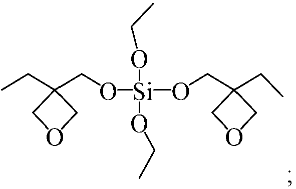 A6: 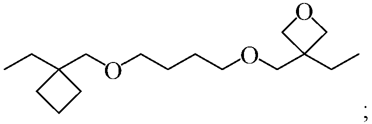 B1: 3,4-epoxycyclohexylmethyl-3',4'-epoxycyclohexyl carboxylate B2: 2,2'-[(1-methylethylene)bis(4,1-phenylenecarboxaldehyde)]bisoxirane B3: 3-hydroxymethyl-3-ethyloxetane C1: 4-isobutyl-4'-methyldiphenyliodonium hexafluorophosphate C2: 4-(phenylthio)phenyldiphenylsulfonium hexafluorophosphate D: PSS-306 (9,10-diethoxy-2-ethylanthracene, a sensitizer) E: inorganic carbon black (Clariant Chemicals (China) Ltd.) | | | | | | | | | | | | | | | |

### 2. Curing and drying speed test

The ink to be tested was printed using a Sotech solvent-free gravure printer (model: A380), wherein an LED lamp with a wavelength of 385 nm was added to the machine as a radiation light source. The ink to be tested was transferred to a PET film (common industrial film FP2, Lucky Group Corporation) by the gravure printer, wherein the printing thickness was set to 5 µm, and the irradiation intensity of the LED light source was 20 w/cm².

After the light exposure, it was left for 24 hours, and the surface curing status was evaluated according to the finger touch method in the paint film drying time test standard GB/T 1728-1979 (that is, touching the coating lightly with the finger, and confirming the surface dryness by smooth and non-sticky surface without fingerprints when pressed. The drying speed was expressed as the maximum linear speed that achieves the surface drying effect, in m/min.

### 3. Performance evaluation

The linear speeds on the gravure printer were set to 220 m/min and 150 m/min, respectively. The PET film was used as the substrate, the printing thickness was set to 5 µm, and the irradiation intensity of the 385 nm LED light source was 20 w/cm². After exposure, it was left for 24 hours, and the layout fogging and adhesion of the cured coating were then evaluated.

### (1) Coating adhesion test

According to "GB/T9286-1998 Scratch Test of Paint and Varnish Film", the adhesion on the substrate was tested by cross-cut (100-grid scratching knife) method using QFH paint film grid-scratching instrument. The specific procedure was as follows:
The knife tool that complies with "GB/T9286-1998 Scratch Test of Paint and Varnish Film" was used to cut on the coating surface, to ensure that the scratching reaches the substrate surface each time. The coating surface was cleaned with a soft brush, a tape was applied on the coating such that the tape was in full contact with the coating, and the tape was finally torn from the coating surface, to evaluate the results.
Level 0: The cut edge was completely smooth without one grid falling off;
Level 1: There was a little coating peeling off at the intersection of incisions, with the affected cross-cut areas of not greater than 5%;
Level 2: There was coating peeling off at the intersection of incisions and/or along the edge of incisions, with the affected areas of greater than 5% but not greater than 15%;
Level 3: The coating was partially or completely peeled off in large fragments along the cut edge, and/or partially or completely peeled off on different parts of the grids, with the affected cross-cut areas of greater than 15% but not greater than 35%;
Level 4: The coating was peeled off in large fragments along the cut edge, and/or some grids were partially or completely peeled off, with the affected cross-cut areas of greater than 35% but not greater than 65%;
Level 5: The degree for peeling off exceeded Level 4.

### (2) Layout fogging test

A printed product was obtained by printing on a PET film using the gravure printer at a printing speed of 220 m/min, irradiating at an intensity of 20 w/cm² by 385 nm LED light source, and being left for 24 hours after exposure. The amount of ink (i.e., degree of layout fogging) attached to the blank area (non-image area) of the printed film obtained was visually evaluated according to the following criteria:
5: No ink transfer was observed in the non-image area.
4: Slight ink transfer was observed in a small region (less than 5%) of the non-image area.
3: Ink transfer was observed in the middle region (less than 5% to 10%) of the non-image area.
2: Ink transfer was observed in a large region (10% or more) of the non-image region.
1: Ink transfer was observed over the entire non-image area.

**Table 4**

| | Curing and drying speed | Adhesion | Layout fogging |
|---|---|---|---|
| Example 1 | 210 | 0 | 5 |
| Example 2 | 220 | 0 | 5 |
| Example 3 | 240 | 0 | 5 |
| Example 4 | 240 | 0 | 5 |
| Example 5 | 235 | 0 | 5 |
| Example 6 | 235 | 0 | 5 |
| Example 7 | 220 | 0 | 5 |
| Example 8 | 240 | 0 | 5 |
| Comparative Example 1 | 235 | 3 | 5 |
| Comparative Example 2 | 200 | 0 | 4 |
| Comparative Example 3 | 170 | 2 | 3 |
| Comparative Example 4 | 190 | 1 | 3 |
| Comparative Example 5 | 180 | 2 | 3 |
| Comparative Example 6 | 150 | 0 | 2 |
| Comparative Example 7 | 220 | 3 | 4 |

It can be seen from the performance evaluation results in Table 4 that, the cationic photocurable composition of the present invention has excellent curing performances, can well solve the layout fogging problem in the gravure printing ink, and has strong application prospects.

The above descriptions are merely preferred embodiments of the present invention and are not intended to limit the present invention. For those skilled in the art, the present invention may have various modifications and changes. Any modification, equivalent replacement, and improvement made within the spirit and principle of the invention shall be included within the scope of the invention.

## Claims

1. A cationic photocurable composition, **characterized in that**, the cationic photocurable composition comprises the following components:
component A1: 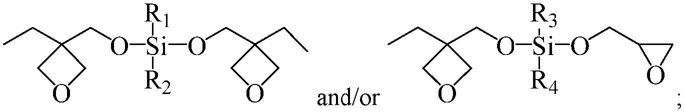
component A2: 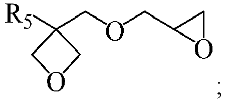
component B: an epoxy compound; and
component C: a cationic initiator;
wherein R₁, R₂, R₃, R₄, and R₅ each independently represent C₁ to C₆ alkyl; the cationic photocurable composition comprises 50 to 70 parts by weight of the component A1, 10 to 30 parts by weight of the component A2, 5 to 25 parts by weight of the component B, and 1 to 10 parts by weight of the component C, and the sum of the parts by weight of the component A1 and the component A2 is 65 to 95 parts.

2. The cationic photocurable composition according to claim 1, **characterized in that**, the cationic photocurable composition comprises 50 to 70 parts by weight of the component A1, 10 to 25 parts by weight of the component A2, 5 to 25 parts by weight of the component B, and 1 to 5 parts by weight of the component C, and the sum of the parts by weight of the component A1 and the component A2 is 70 to 90 parts.

3. The cationic photocurable composition according to claim 1 or 2, **characterized in that**, R₁, R₂, R₃, R₄, and R₅ each independently represent C₁ to C₃ alkyl;
preferably, R₁ and R₂ are the same, and R₃ and R₄ are the same;
more preferably, the component A1 is 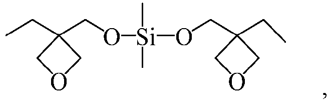 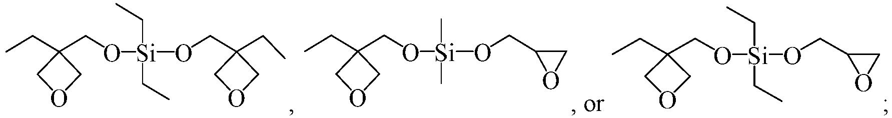 more preferably, the component A2 is

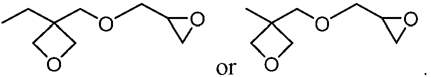

4. The cationic photocurable composition according to any of claims 1 to 3, **characterized in that**, the epoxy compound is selected from one or more of alicyclic epoxy compounds, aromatic epoxy compounds, or monofunctional oxetanes;
preferably, the alicyclic epoxy compound is selected from one or more of 3,4-epoxycyclohexenemethyl-3,4-epoxycyclohexenoate, 3,4,3',4'-diepoxybiscyclohexane, 2,2-bis(3,4-epoxycyclohexyl)propane, 2,2-bis(3,4-epoxycyclohexyl)-1,3-hexafluoropropane, bis(3,4-epoxycyclohexyl)methane, 1-[1,1-bis(3,4-epoxycyclohexyl)]ethylbenzene, bis((3,4-epoxycyclohexyl)methyl)adipate, or bis(3,4-epoxycyclohexylmethyl) oxalate;
preferably, the monofunctional oxetane is selected from one or more of 3-hydroxymethyl-3-ethyloxetane, 3-benzyloxymethyl-3-ethyloxetane, 3-ethyl-3-(phenoxymethyl)oxetane, or 3-ethyl-3-((octyloxy)methyl)oxetane;
preferably, the aromatic epoxy compound is selected from 2,2'-[(1-methylethylene)bis(4,1-phenylenecarboxaldehyde)]bisoxirane.

5. The cationic photocurable composition according to any of claims 1 to 4, **characterized in that**, the cationic initiator is selected from onium salts, preferably the onium salt is selected from one or more of diaryliodonium salts of phosphoric acid, triarylsulfonium salts of phosphoric acid, or triarylsulfonium salts of antimonic acid;
preferably, the diaryliodonium salt of phosphoric acid is selected from one or more of 4,4'-ditolyliodonium hexafluorophosphate, bis(4-tert-butylphenyl)iodonium hexafluorophosphate, 4-isopropyl-4'-methyldiphenyliodonium hexafluorophosphate, or 4-isobutyl-4'-methyldiphenyliodonium hexafluorophosphate;
preferably, the triarylsulfonium salt of phosphoric acid is selected from one or more of 4-(phenylthio)phenyldiphenylsulfonium hexafluorophosphate, bis(4-(diphenylsulfonium)phenyl)sulfide-bishexafluorophosphate, or triphenylsulfonium hexafluorophosphate;
preferably, the triarylsulfonium salt of antimonic acid is selected from one or more of bis(4-tert-butylphenyl)iodonium hexafluoroantimonate, bis[4-diphenylsulfoniumphenyl]sulfide dihexafluoroantimonate, or diphenyl-(4-phenylthio)phenylsulfonium hexafluoroantimonate.

6. The cationic photocurable composition according to any of claims 1 to 5, **characterized in that**, the cationic photocurable composition further comprises component D: a sensitizer; preferably, the component D has a mass percentage of 0.1 to 5% in the cationic photocurable composition;
preferably, the component D is selected from one or more of thioxanthone compounds, xanthone compounds, acridine compounds, anthracene compounds, or coumarin compounds; more preferably, anthracene compounds and/or thioxanthone compounds;
further preferably, the anthracene compound is selected from one or more of PSS303, PSS306, PSS510, PSS513, or PSS515;
further preferably, the thioxanthone compound is selected from one or more of JRCure-1105 (ITX) or JRCure-1106 (DETX).

7. The cationic photocurable composition according to any of claims 1 to 6, **characterized in that**, the cationic photocurable composition further comprises component E: a colorant; preferably, the component E has a mass percentage of 2 to 20% in the photocurable resin composition;
preferably, the colorant is selected from inorganic pigment and/or organic pigment;
more preferably, the organic pigment is selected from one or more of perylenes, phthalocyanine dyes, cyanine pigments, naphthalocyanine pigments, nitroso pigments, azo pigments, diazo pigments, diazo condensation pigments, basic dye pigments, basic blue pigments, indigo pigments, phloxin pigments, quinacridone pigments, isoindolinone pigments, dioxazine pigments, carbazole dioxazine violet pigments, alizarin lake pigments, phthaldiamide pigments, carmine lake pigments, tetrachloroisoindolinone pigments, perinone pigments, anthraquinone pigments, or quinophthalone pigments;
more preferably, the inorganic pigment is selected from one or more of metal oxides, silicon oxides, carbon black pigments, metal sulfides, or metal chlorides.

8. A paint, **characterized in that**, the paint comprises the cationic photocurable composition according to any of claims 1 to 6.

9. An article with photocured coating, comprising a substrate layer and a photocured coating coated on at least a portion of the substrate layer, **characterized in that**, the photocured coating is formed from the cationic photocurable composition according to any of claims 1 to 6 by radiation curing.

10. The article with photocured coating according to claim 9, **characterized in that**, the substrate layer is a metal substrate layer or a plastic substrate layer;
preferably, the plastic substrate layer is propylene film, polyethylene film, or polyester film; preferably, the metal substrate layer is tinplate or aluminum plate.

11. The article with photocured coating according to claim 9 or 10, **characterized in that**, the radiation curing is performed under a radiation source, preferably the radiation source is selected from one or more of ultraviolet light, visible light, infrared light, electron beam, or laser;
more preferably, the radiation source is a UV mercury lamp or a UV-LED lamp with a wavelength range of 200 to 500 nm;
further preferably, the radiation source has a radiation energy of 20 to 1000 mj/cm².

12. An ink, **characterized in that**, the ink comprises the cationic photocurable composition according to claim 7.

13. Use of the ink according to claim 12 in the gravure printing.
